(19) Europäisches Patentamt
European Patent Office
Office européen des brevets

(11) Veröffentlichungsnummer: **0 168 739**
**B1**

# (12) EUROPÄISCHE PATENTSCHRIFT

(45) Veröffentlichungstag der Patentschrift: **29.04.87**

(51) Int. Cl.[4]: **C 09 B 62/25**, D 06 P 1/382

(21) Anmeldenummer: **85108424.4**

(22) Anmeldetag: **08.07.85**

(54) **Reaktivfarbstoffe.**

(30) Priorität: **18.07.84 DE 3426422**

(43) Veröffentlichungstag der Anmeldung: **22.01.86 Patentblatt 86/4**

(45) Bekanntmachung des Hinweises auf die Patenterteilung: **29.04.87 Patentblatt 87/18**

(84) Benannte Vertragsstaaten: **CH DE FR GB LI**

(56) Entgegenhaltungen:
**EP-A-0 065 479**
**EP-A-0 125 650**
**EP-A-0 139 248**
**GB-A-1 173 361**

(73) Patentinhaber: **BAYER AG, Konzernverwaltung RP Patentabteilung, D-5090 Leverkusen 1 Bayerwerk (DE)**

(72) Erfinder: **Herd, Karl Josef, Dr., Am Gartenfeld 66, D-5068 Odenthal- Holz (DE)**
Erfinder: **Schündehütte, Karl Heinz, Prof. Dr., Klief 75, D-5090 Leverkusen 3 (DE)**

EP 0 168 739 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue reaktivgruppenhaltige Farbstoffe der Struktur (1)

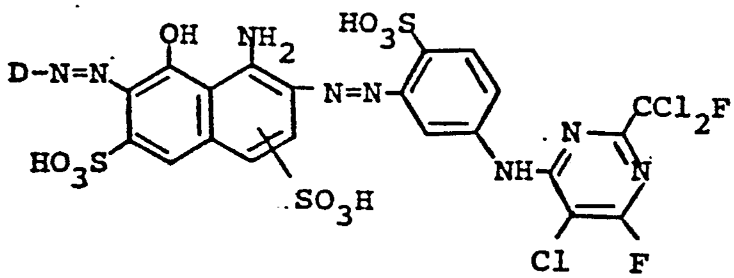

(1)

in welcher
D die Struktur

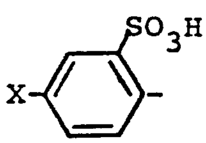

,

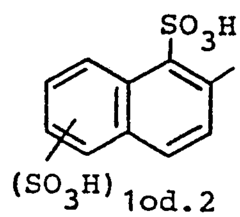

oder

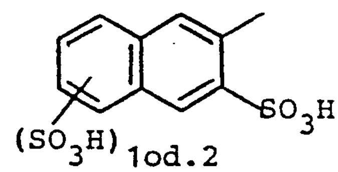

zukommt, wobei
X = Wasserstoff, $C_1$-$C_4$-Alkyl, $C_1$-$C_4$-Alkoxy, Halogen, Carboxy, Sulfo oder einen gegebenenfalls substituierten Phenylazorest bedeutet.
X steht bevorzugt für H, $CH_3$, Cl, $SO_3H$, 4-Sulfophenylazo.
Besonders bevorzugt sind die beiden Farbstoffe der Struktur (3) und (4)

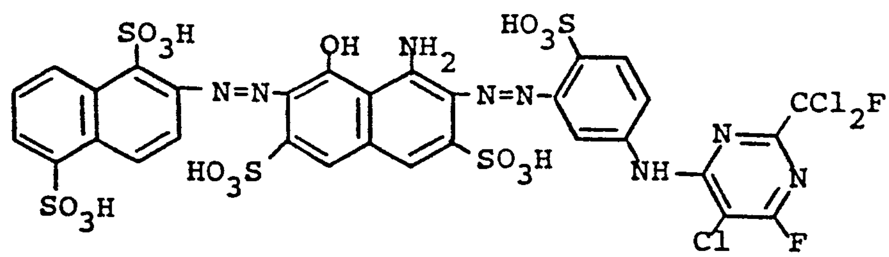

(3)

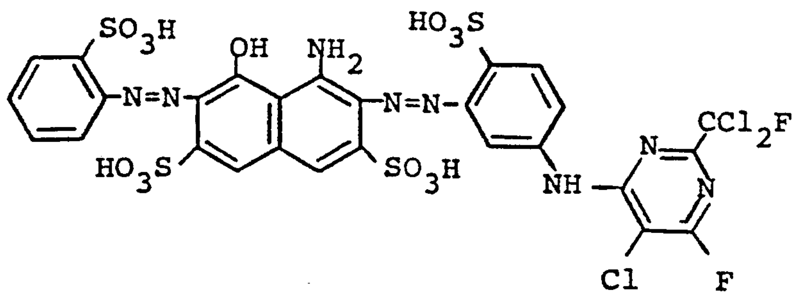

(4)

Die Herstellung der neuen reaktivgruppenhaltigen Azofarbstoffe der Struktur (1) kann man beispielsweise in der Weise durchführen, daß man chromophore Aminoverbindungen der Formel

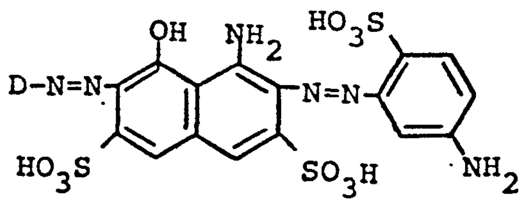

(5)

im wäßrigen Medium bei einem pH zwischen 6 bis 8 mit 5-Chlor-2-(dichlorfluormethyl)-4,6-difluorpyrimidin der Formel

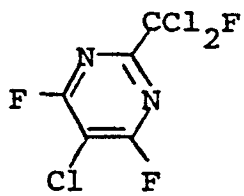

(6)

kondensiert.

Eine andere Herstellungsvariante besteht in der Kondensation von (6) mit 2,4-Diamino-benzolsulfonsäure bei pH 5 bis 7, nachfolgender Diazotierung des Kondensationsproduktes und Kupplung auf 1-Amino-8-hydroxynaphthalin-3,6- bzw. -4,6-disulfonsäure unter sauren Bedingungen (pH 1 bis 3).

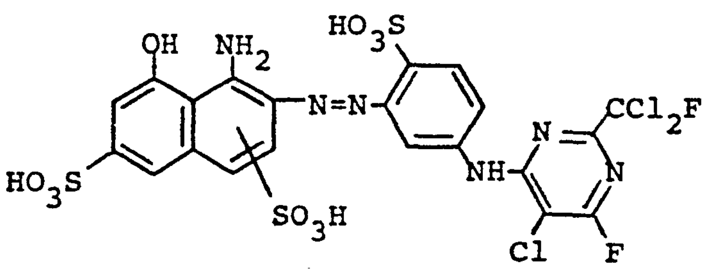

(7)

Diazotierung von Aminen der Struktur D-$NH_2$ und Kupplung auf (7) unter neutralen Bedingungen führt zu den Farbstoffen der Struktur (1).

Die Herstellung des Farbstoffes der Struktur (3) kann bevorzugt auch nach folgendem "Eintopf-Verfahren" erfolgen:

Man diazotiert das Kondensationsprodukt aus (6) und 2,4-Diaminobenzolsulfonsäure sowie die 2-Aminonaphthalin-1,5-disulfonsäure gemeinsam in einem Reaktionsgefäß, fügt zur Diazotierungsmischung bei pH 1 bis 3 langsam eine neutrale Lösung von 1-Amino-8-hydroxynaphthalin-3,6-disulfonsäure und erhöht dann den pH der roten Reaktionsmischung durch Zugabe von Bicarbonat- oder Natriumacetatlösung langsam auf einen Wert von 6 bis 7. Der Farbstoff kann durch Aussalzen oder Sprühtrocknung isoliert werden.

Die neuen Farbstoffe der Formel (1), die Nuancen von marineblau, dunkelblau, grünstichig blau bis schwarz aufweisen können, eignen sich besonders zum Färben und Bedrucken von Hydroxyl- oder Amidgruppen enthaltenden Fasermaterialien, bevorzugt zum Färben von nativer oder regenerierter Cellulose, wobei die Behandlung zweckmäßigerweise in Gegenwart säurebindender Mittel nach den für Reaktivfarbstoffe bekanntgewordenen Verfahren erfolgt.

Die damit praktizierten Färbungen zeichnen sich durch eine hervorragende Chlorechtheit und Oxidationsbeständigkeit aus.

Die oben angegebenen Formeln sind die der freien Säuren. Im allgemeinen erhält man bei der Synthese die Alkalisalze, insbesondere die Na- oder Li-Salze und verwendet die Farbstoffe auch in dieser Form zum Färben.

**Beispiel 1**

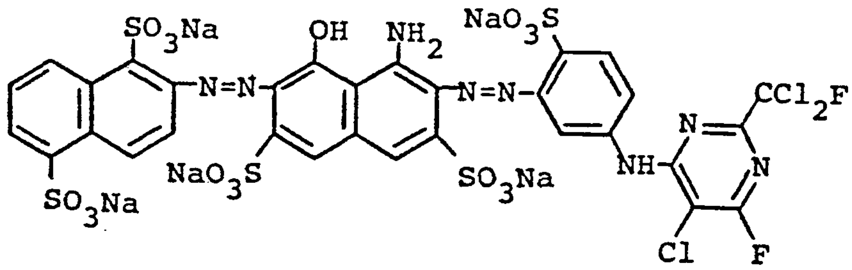

A: 29,8 g 2,4-Diaminobenzolsulfonsäure werden in 450 ml Wasser und 15 ml konz. Natronlauge bei pH 6 vorgelegt, auf 45°C erwärmt und mit 40 g 5-Chlor-2-(dichlorfluormethyl)-4,6-difluorpyrimidin umgesetzt. Dabei hält man den pH durch Zugabe von ca. 85 ml einer 20 %igen Sodalösung konstant zwischen 5,5 - 6,0. Nach 3 Stunden Rühren bei 45°C heizt man kurzzeitig auf 55°C und kühlt dann durch Eiszugabe auf 0 - 5°C ab. Man versetzt langsam mit 60 ml konz. Salzsäure und tropft dann 27,5 ml einer 30 %igen (g/l) Natriumnitritlösung zu. Nach 2 Stunden bei 5°C fügt man 5 ml Amidosulfonsäurelösung zu. Dazu tropft man langsam eine neutrale Lösung von 49,4 g 1-Amino-8-hydroxynaphthalin-3,6-disulfonsäure (H-Säure) in 400 ml Wasser und stellt den pH durch Zugabe von festem Natriumhydrogencarbonat oder Lithiumcarbonat auf pH 2,5 - 2,7. Die Suspension wird nach 3 Stunden Rühren auf 30°C erwärmt und der pH durch weitere Carbonatzugabe auf 4,0 erhöht. Die resultierende rote Lösung wird mittels Filterhilfe geklärt und nach Zugabe von 100 g Eis mit einer Diazoniumsalzsuspension, die aus 41,4 g 2-Aminonaphthalin-1,5-disulfonsäure durch Diazotierung bereitet wurde, versetzt. Mit Sodalösung erhöht man den pH der Mischung auf 7,5 und rürt 1 Stunde nach. Es wird mit 250 g Kochsalz ausgesalzen, und der Farbstoff durch Absaugen isoliert und bei 70°C i.Vak. getrocknet. Man erhält 170 g eines Farbstoffpulvers, das Baumwolle in grünstichig dunkelblauen, bzw. - bei höheren Konzentrationen - in schwarzen Tönen färbt.

B: Man kondensiert 29,8 g 2,4-Diaminobenzolsulfonsäure mit 40 g 5-Chlor-2-(dichlorfluormethyl)-4,6-difluorpyrimidin in der unter A beschriebenen Weise, fügt zur 0 - 5°C kalten Suspension 41,4 g 2-Aminonaphthalin-1,5-disulfonsäure und 80 ml konz. Salzsäure und tropft dann 76 ml einer 30 %igen Natriumnitritlösung zu. Die Temperatur sollte dabei 5°C nicht übersteigen. Nach 2 Stunden versetzt man mit 10 ml Amidosulfonsäurelösung und stellt die Mischung mit Sodalösung auf pH 2,0. Dazu tropft man langsam eine neutrale Lösung von 49,4 g H-Säure in 400 ml Wasser und rührt solange bei pH 2,0 - 2,5 nach, bis eine Temperatur von 20 - 22°C erreicht wird. Durch langsames Zudosieren von festem Natriumhydrogencarbonat erhöht man den pH innerhalb von 2 Stunden auf pH 7,5 und läßt bei konstantem pH noch 2 Stunden nachrühren. Es resultiert eine tiefblaue Lösung, die mittels Filterhilfe geklärt und anschließend sprühgetrocknet wird. Es werden 195 g Farbstoff isoliert, der sich mit dem unter A erhaltenen als identisch erweist.

**Beispiel 2**

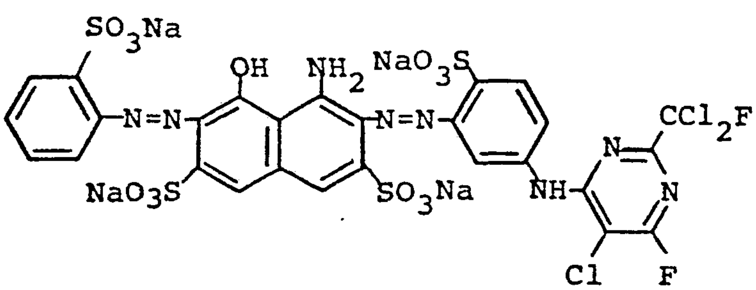

A: Verwendet man anstelle von 2-Aminonaphthalin-1,5-disulfonsäure in Beispiel 1 nun 2-Aminobenzolsulfonsäure und führt die einzelnen Reaktionsschritte analog Beispiel 1 durch, so resultiert ein dunkles Farbstoffpulver, das ebenfalls auf Baumwolle tiefschwarze Färbungen mit hervorragenden Echtheiten liefert.

C: In bekannter Weise ist durch eine zweifache Kupplung von diazotierter 4-Acylamino-2-aminobenzolsulfonsäure und diazotierter 2-Aminobenzolsulfonsäure auf H-Säure und nachfolgender Verseifung der Acylaminogruppierung ein Zwischenprodukt der folgenden Struktur erhältlich:

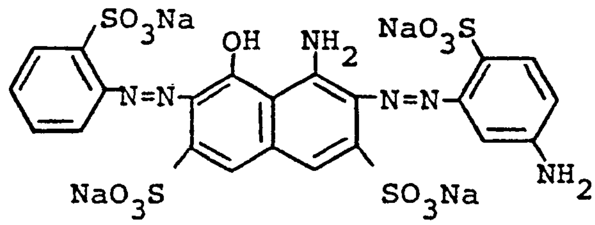

135 g dieses Zwischenprodukts werden in 250 ml Wasser gelöst und bei konstantem pH 7,5 mit 36 g 5-Chlor-2-(dichlorfluormethyl)-4,6-difluorpyrimidin umgesetzt. Die pH-Steuerung erfolgt dabei durch Zugabe von 20 %iger Sodalösung. Die Reaktion ist nach ca. 2 Stunden beendet. Die blaue Lösung wird mittels Filterhilfe geklärt und der Farbstoff mit 50 g Kochsalz ausgesalzen. Nach dem Abnutschen und Trocknen erhält man 160 g eines Farbstoffes, der dem unter A entspricht.

**Beispiel 3**

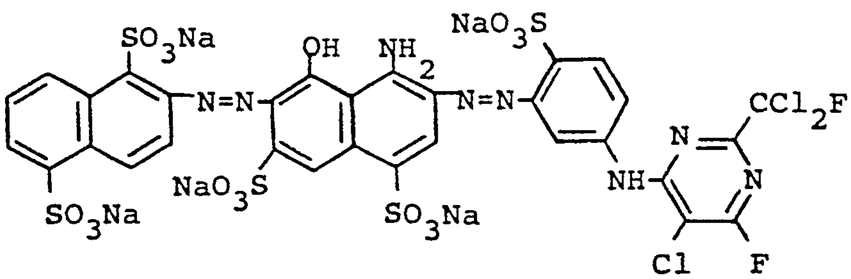

Verwendet man anstelle von H-Säure in Beispiel 1 nun K-Säure (1-Amino-8-hydroxynaphthalin-4,6-disulfonsäure), so resultiert ein Farbstoff, der marineblaue Färbungen von hervorragender Echtheit liefert.

Durch Einsatz von H-Säure/K-Säure-Mischungen als Kupplungskomponente lassen sich Farbstoffmischungen aus Beispiel 1 und 3 herstellen, die ebenfalls hochwertige dunkelblaue bzw. schwarze Färbungen liefern.

Verwendet man anstelle von 2-Aminonaphthalin-1,5-disulfonsäure in Beispiel 1 andere Diazokomponenten, so sind die in der Tabelle aufgeführten Farbstoffe zugänglich.

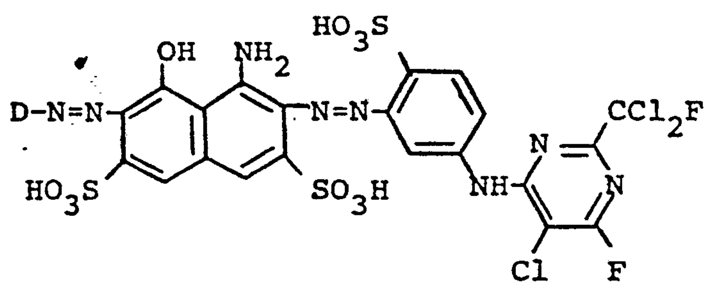

| Bsp. | D | Nuancen |
|---|---|---|
| 4 | 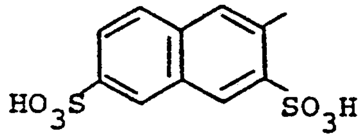 | grünst. blau |
| 5 | 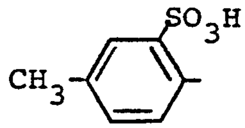 | dkl. blau |
| 6 | 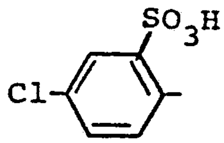 | grünst. blau |
| 7 | 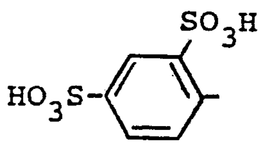 | grünst. blau |
| 8 | 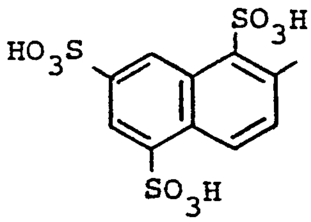 | grünst. blau |
| 9 | 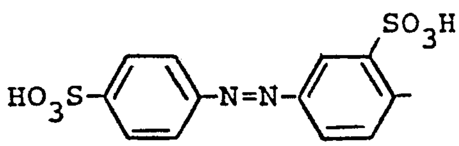 | stark grünst. blau |
| 10 | 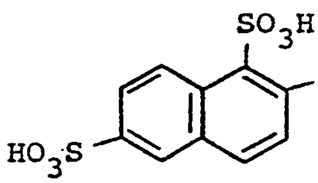 | grünst. blau |

**Patentansprüche**

1. Reaktivgruppenhaltige Farbstoffe der allgemeinen Formel (1)

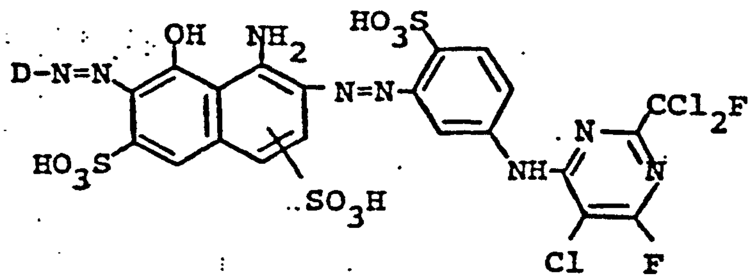

(1)

in welcher
D die Struktur

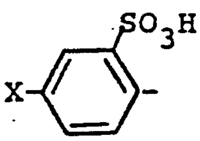

,

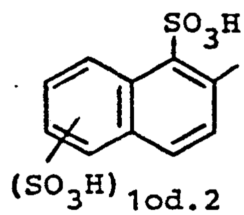

oder

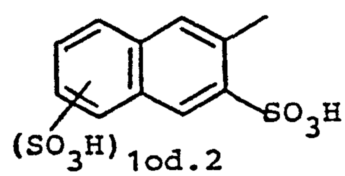

zukommt, wobei
X = Wasserstoff, $C_1$-$C_4$-Alkyl, $C_1$-$C_4$-Alkoxy, Halogen, Carboxy, Sulfo oder einen gegebenenfalls substituierten Phenylazorest bedeutet.

2. Farbstoff der Formel

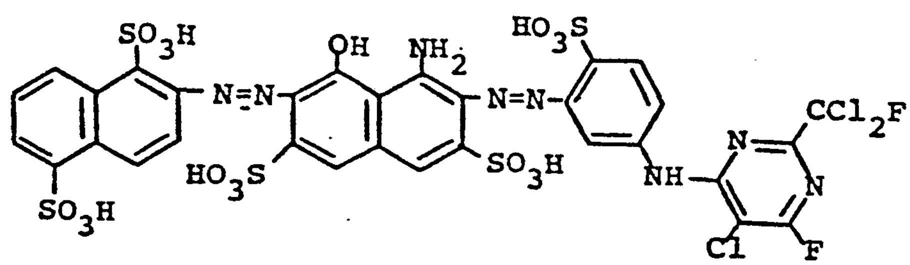

3. Farbstoff der Formel

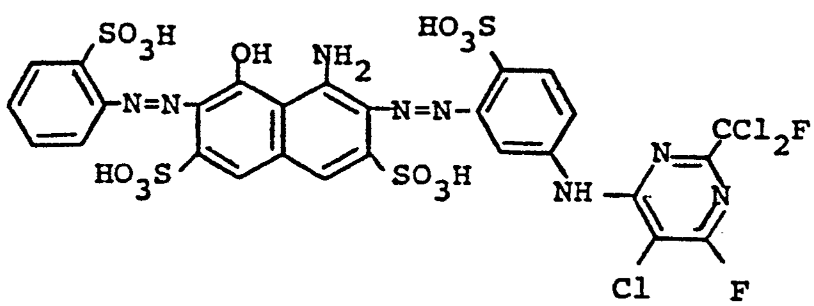

4. Verfahren zur Herstellung der Farbstoffe des Anspruchs 1, dadurch gekennzeichnet, daß man Aminoverbindungen der Struktur

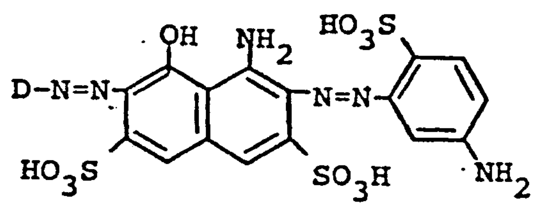

worin D die in Anspruch 1 genannte Bedeutung zukommt, mit 5-Chlor-2-(dichlorfluormethyl)-4,6-difluorpyrimidin der Formel

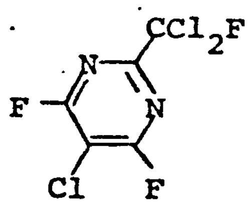

-(6)

unter neutralen Bedingungen kondensiert,

oder aber das Kondensationsprodukt aus (6) und 2,4-Diaminobenzolsulfonsäure diazotiert, auf 1-Amino-8-hydroxynaphthalin-3,6- bzw. -4,6-disulfonsäure unter sauren Bedingungen kuppelt und das resultierende Monoazoprodukt der Formel

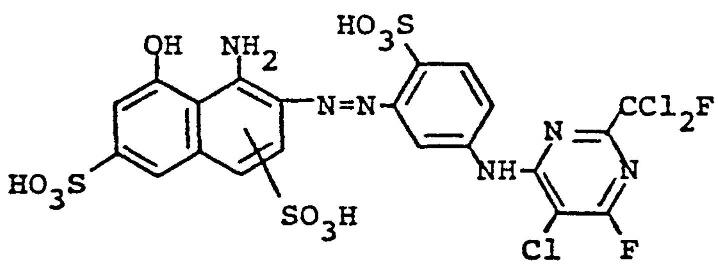

anschließend mit diazotierten Aminen D-$NH_2$ unter neutralen Bedingungen umsetzt.

5. Verwendung der Farbstoffe der Ansprüche 1 bis 3 zum Färben und Bedrucken von Hydroxyl- oder Amidgruppen-haltigen Fasermaterialien, insbesondere von Baumwolle.

6. Mit den Farbstoffen der Ansprüche 1 - 3 gefärbtes oder bedrucktes Hydroxyl- oder Amidgruppen-haltiges Fasermaterial.

**Revendications**

1. Colorants porteurs de groupes réactifs, de formule générale (1)

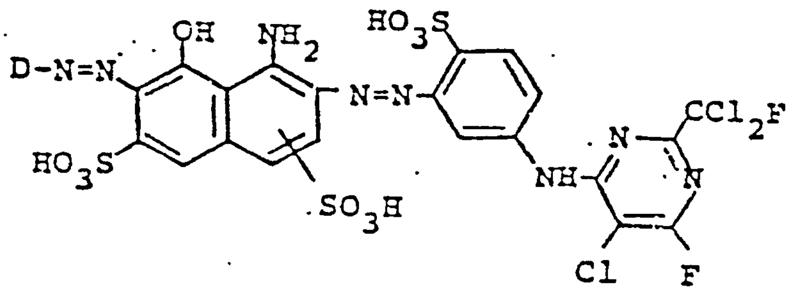

(1)

dans laquelle
D a la structure

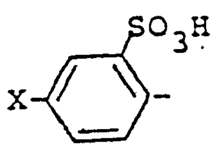

,

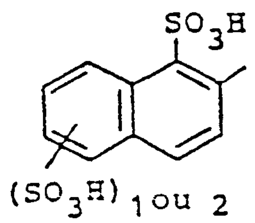

ou

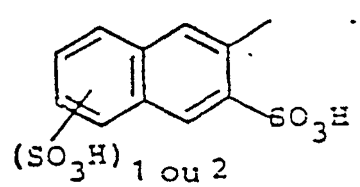

où
X = hydrogène, alkyle en $C_1$ à $C_4$, alkoxy en $C_1$ à $C_4$, halogène, carboxy, sulfo ou un reste phénylazo éventuellement substitué.

2. Colorant de formule

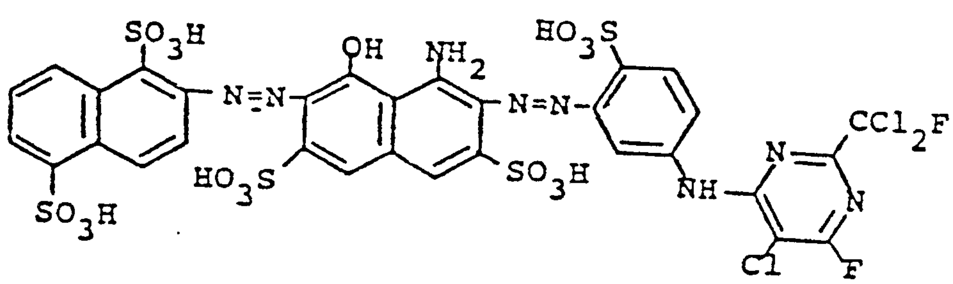

3. Colorant de formule

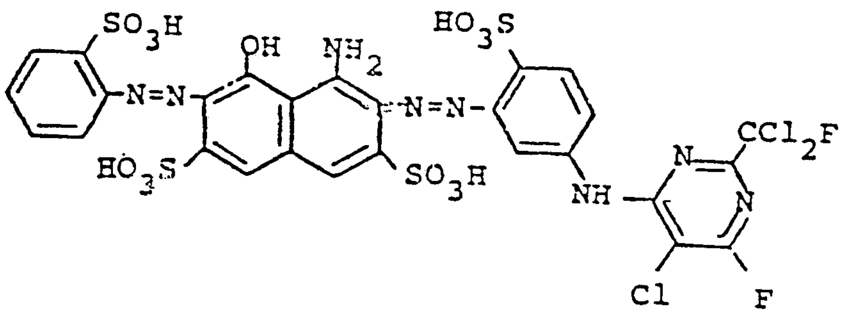

4. Procédé de production des colorants suivant la revendication 1, caractérisé en ce qu'on condense dans des conditions neutres des composés aminés de structure

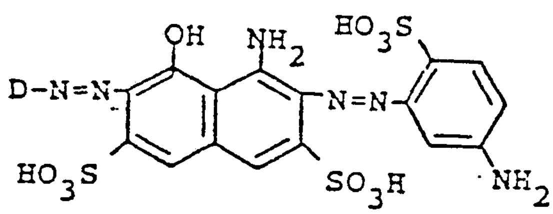

dans laquelle D a la définition indiquée dans la revendication 1, avec la 5-chloro-2-(dichlorofluorométhyl) -4,6-difluoropyrimidine de formule

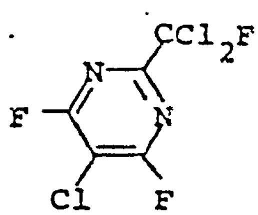

-(6)

ou bien on diazote le produit de condensation de (6) et de l'acide 2,4-diaminobenzènesulfonique, on fait copuler le produit sur l'acide 1-amino-8-hydroxynaphtalène-3,6-ou -4,6-disulfonique dans des conditions acides et on fait ensuite réagir le produit monoazoïque résultant de formule

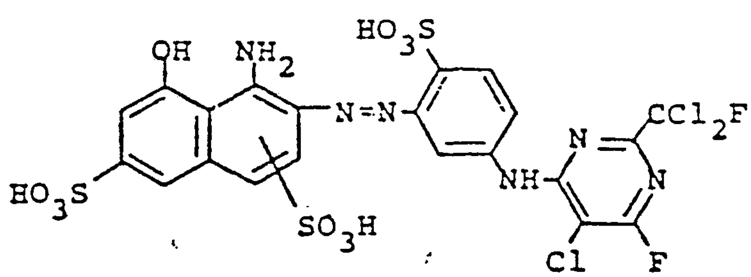

avec des amines diazotées $D-NH_2$ dans des conditions neutres.

5. Utilisation des colorants suivant les revendications 1 à 3, pour la teinture et l'impression de matières fibreuses portant des groupes hydroxyle ou amide notamment de coton.

6. Matière fibreuse portant des groupes hydroxyle ou amide, teinte ou imprimée avec les colorants suivant les revendications 1 à 3.

**Claims**

1. Dyestuffs which contain reactive groups and have the general formula (I)

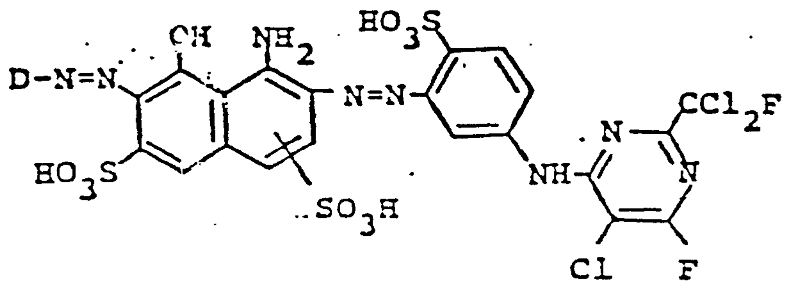

(1)

in which
D has the structure

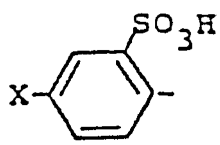

,

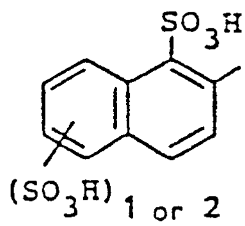

or

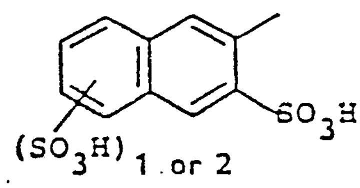

where
X denotes hydrogen, $C_1$-$C_4$-alkyl, $C_1$-$C_4$-alkoxy, halogen, carboxyl, sulpho or an optionally substituted phenylazo radical.

2. Dyestuff of the formula

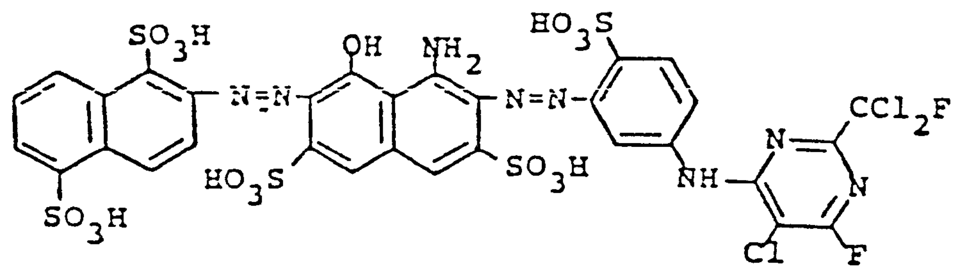

3. Dyestuff of the formula

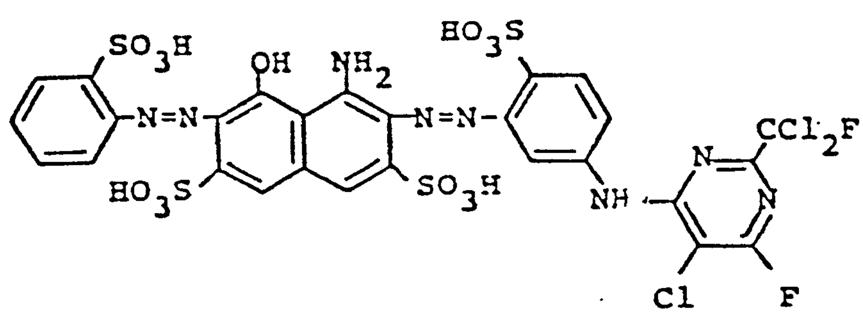

4. Process for preparing the dyestuffs of Claim 1, caracterised in that amino compounds of the structure

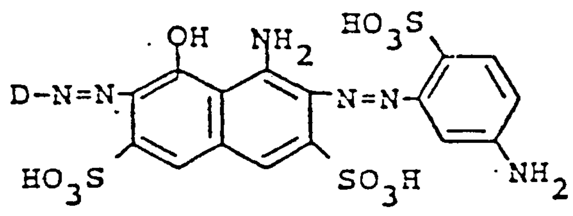

wherein
D has the meaning mentioned in Claim 1, are condensed under neutral conditions with 5-chloro-2-(dichlorofluoromethyl)-4,6-difluoropyrimidine of the formula

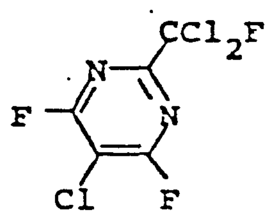

-(6)

or the condensation product of (6) and 2,4-diaminobenzene-sulphonic acid is diazotised and coupled under acid conditions on to 1-amino-8-hydroxynaphthalene-3,6- or -4,6-disulphonic acid, and the resulting monoazo product of the formula

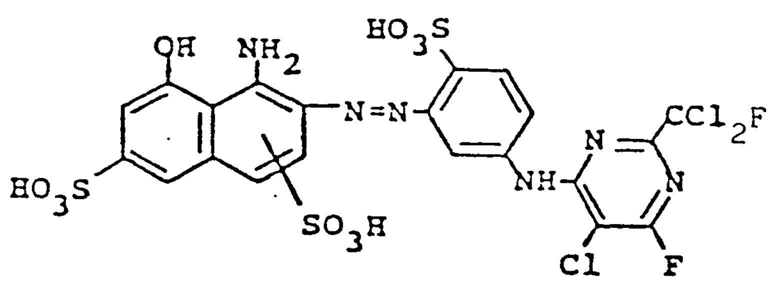

is subsequently reacted with diazotised amines D-$NH_2$ under neutral conditions.

5. Use of the dyestuffs of Claims 1 to 3 for dyeing and printing hydroxyl- or amide-group containing fibre materials, in particular cotton.

6. Hydroxyl- or amide-group-containing fibre material dyed or printed with the dyestuffs of Claims 1 - 3.